# EUROPEAN PATENT APPLICATION

(11) **EP 3 886 297 A1**
(43) Date of publication of application: **29.09.2021**
(21) Application number: 21160741.1
(22) Date of filing: 04.03.2021
(51) Int. Cl.: H02K 3/12

(54) **STATOR OF ROTATING ELECTRIC MACHINE AND METHOD OF MANUFACTURING COIL SEGMENT**

(30) Priority: 24.03.2020 JP 2020052737
(71) Applicant: TOYOTA JIDOSHA KABUSHIKI KAISHA, Toyota-shi, Aichi-ken, 471-8571 (JP)
(72) Inventor: MATSUMOTO, Masashi, Aichi-ken, 471-8571 (JP); KAWAMURA, Hazuki, Aichi-ken, 471-8571 (JP); WATANABE, Kohei, Aichi-ken, 471-8571 (JP)
(74) Representative: J A Kemp LLP

(57) **Abstract**

A stator core (10) of a stator (50) includes a plurality of teeth (12) around a rotation axis and slots (14) respectively provided between the teeth (12). A coil (60) that is formed by connecting a plurality of coil segments (40, 62) is wound around the teeth (12). At a coil end (64) of the coil (60) protruding from an end surface of the stator core (10) in the rotation axial direction, a widened portion (40a) is provided in the coil segment (40). Therefore, a cross-sectional area of the coil segment (40) at the coil end (64) is different from that on the inner side of the slot (14).

## Description

### BACKGROUND OF THE INVENTION

### 1. Field of the Invention

The present invention relates to a stator of a rotating electric machine that uses a coil segment and a method of manufacturing the coil segment.

### 2. Description of Related Art

In a stator of a rotating electric machine, there is a case where a coil is formed by connecting a plurality of coil segments to each other. When the coil segments are arranged at a stator core, the coil segments protrude at both ends of the stator core in the rotation axial direction such that coil ends are formed. Therefore, reducing heights of the coil ends and a size of the stator has been attempted.

Japanese Unexamined Patent Application Publication No. 2014-225974 describes an example where a coil segment, which is formed by processing a rectangular wire substantially into a U-shape, is used. Here, in a case where the coil end is formed by a connection portion that connects two U-shaped leg portions to each other, a height of the coil end is reduced by bending the coil end into a predetermined shape.

Japanese Unexamined Patent Application Publication No. 2009-194994 (JP 2009-194994 A) describes a coil segment in which a rectangular wire is bent and a connection portion has a stepped shape. Adjacent coil segments are combined using the step, such that a height of a coil end is reduced.

Japanese Unexamined Patent Application Publication No. 2009-194999 describes a method of connecting a plurality of coil segments described in JP 2009-194994 A. Here, a first coil segment which has two short legs and is arranged on one end of a stator core in the rotation axial direction and a second coil segment which has two short legs and is arranged on the other end of the stator core in the rotation axial direction are prepared. Then, the leg of the first coil segment and the leg of the second coil segment come into contact with each other and are pressed to form a coil.

### SUMMARY OF THE INVENTION

In a stator of a rotating electric machine, by increasing a cross-sectional area of a coil segment, it is possible to reduce electrical resistance when energized and improve electrical efficiency. On the other hand, when the cross-sectional area of the coil segment is increased, a size of a coil end is also increased and a size of the stator is increased.

The present invention is to establish a new technology capable of improving electrical efficiency and reducing a size of a stator.

A stator of a rotating electric machine according to a first aspect of the present invention includes a stator core including a plurality of teeth arranged around a rotation axis of the rotating electric machine and slots respectively defined between the teeth, and a coil winding the teeth. The coil includes a plurality of coil segments connected to each other, and a cross-sectional area of at least a part of a coil segment of the plurality of coil segments at a coil end part of the coil protruding from an end surface of the stator core in the rotation axial direction is different from a cross-sectional area of the coil segment on the inner side of a slot of the slots.

In the above aspect, the cross-sectional area of at least the part of the coil segment at the coil end part may be greater than the cross-sectional area of the coil segment on the inner side of the slot.

In the above aspect, the cross-sectional area of at least the part of the coil segment at the coil end part may be smaller than the cross-sectional area of the coil segment on the inner side of the slot.

In the above aspect, at least the part of the coil segment at the coil end part may be widened toward an outer circumferential side of the stator core, as compared with the coil segment on the inner side of the slot.

In the above aspect, a first coil segment including a first connection portion may be connected to a second coil segment including a second connection portion at the coil end part. At least one of the first connection portion and the second connection portion may be widened toward the outer circumferential side of the stator core, as compared with the coil segment on the inner side of the slot.

A method of manufacturing a coil segment according to a second aspect of the present invention includes a step of connecting two or more pressed conductor pieces to each other to form a connected conductor that includes a leg portion arranged in a stator core and a connection portion arranged at a coil end part, and a step of executing an insulating process on the connected conductor to form a coil segment. A cross-sectional area of at least a part of the connection portion is formed to be different from that of the leg portion.

According to each aspect of the present invention, it is possible to realize a stator which is improved in electrical efficiency and reduction of a size thereof by controlling electrical resistance and a size of a coil segment.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a partial perspective view of a stator core according to an embodiment;
FIG. 2 is a perspective view illustrating an example of a coil segment;
FIG. 3 is a perspective view illustrating an example of another coil segment;
FIG. 4 is a perspective view illustrating a state where the coil segments in FIGS. 2 and 3 are connected;
FIG. 5 is a perspective view illustrating a state where the coil segments are arranged in the stator core;
FIG. 6 is a diagram schematically illustrating a cross-section of a stator;
FIG. 7 is an exploded view illustrating an example of manufacturing a coil segment;
FIG. 8 is an exploded view illustrating another example of manufacturing the coil segment;
FIG. 9 is a perspective view illustrating an example of a coil segment having a stepped shape;
FIG. 10 is a diagram schematically illustrating a cross-section of the stator in a different example from that in FIG. 6;
FIG. 11 is a diagram schematically illustrating a cross-section of the stator in a different example from those in FIGS. 6 and 10;
FIG. 12 is a perspective view illustrating an example of yet another coil segment;
FIG. 13 is a diagram illustrating the stator in which a refrigerant flow path is formed when viewed from the rotation axial direction;
FIG. 14 is a diagram illustrating the stator in which the refrigerant flow path is formed when viewed from the side;
FIG. 15 is a perspective view illustrating a coil segment used for forming the refrigerant flow path;
FIG. 16 is a perspective view illustrating another coil segment used for forming the refrigerant flow path;
FIG. 17 is a perspective view illustrating yet another coil segment used for forming the refrigerant flow path; and
FIG. 18 is a diagram illustrating a state where the refrigerant flow path is formed by combining the coil segments.

### DETAILED DESCRIPTION OF EMBODIMENTS

Hereinbelow, embodiments will be described with reference to the drawings. In the description, specific cases are exemplified to facilitate understanding, but these are merely examples of the embodiments, and various other embodiments can also be adopted.

### (1) Embodiments of Coil Segments Having Different Cross-sectional Areas

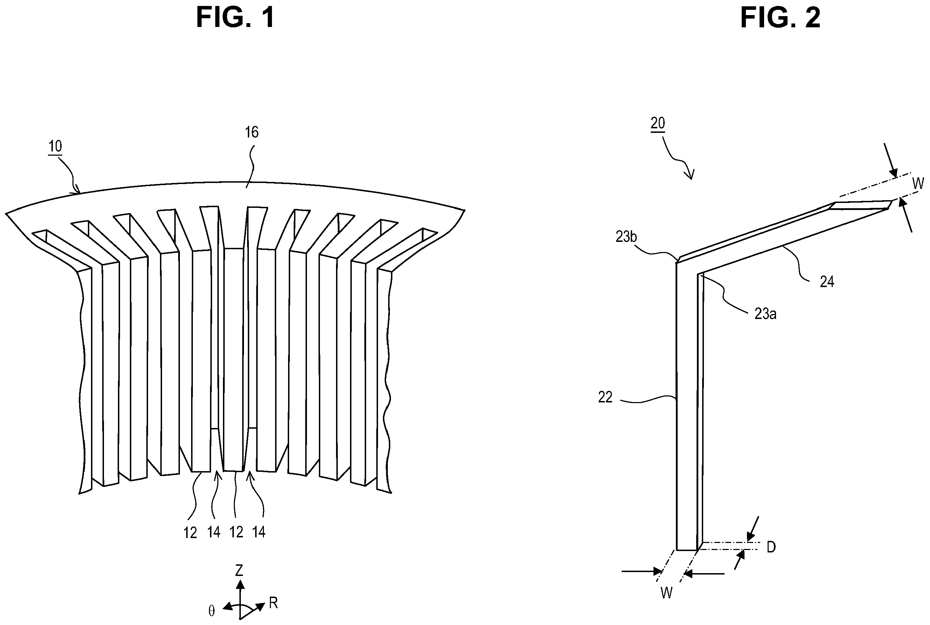

FIG. 1 is a partial perspective view of a stator core 10 that composes a stator of a rotating electric machine according to an embodiment. In the embodiment, the stator core 10 is assumed to be used in a radial gap type rotating electric machine, and is formed in a substantially cylindrical shape and arranged around a rotor and coaxially with the rotation axis of the rotor. FIG. 1 illustrates the stator core 10 at a partial angle in the circumferential direction. In the drawing, a cylindrical coordinate system (R, θ, Z) is illustrated. The Z-axis coincides with the rotation axis of the rotor. The R-axis extends perpendicularly outward from the Z-axis, and the 0-axis is set in the rotating direction around the Z-axis (may be simply referred to as the circumferential direction without specifying the positive or negative of the rotation).

The stator core 10 is formed by, for example, laminating electromagnetic steel plates. The stator core 10 is provided with a plurality of teeth 12 and slots 14 on the inner circumferential side (the side closer to the rotation axis). The tooth 12 has a protrusion structure wound by the coil to form a magnetic pole, and the slot 14 is a groove provided between the teeth 12. On the outer circumferential side of the stator core 10 (the side farther from the rotation axis), electromagnetic steel plates referred to as a yoke 16 are continuously arranged in the circumferential direction.

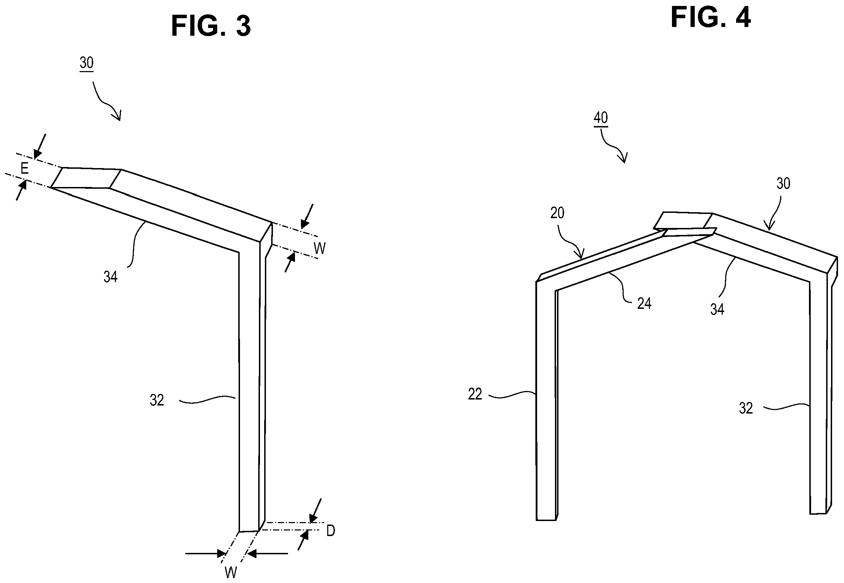

Next, the coil winding around the stator core 10 will be described with reference to FIGS. 2 to 7. FIG. 2 is a perspective view schematically illustrating a shape of a coil segment 20. The coil segment 20 is composed of a leg portion 22 and a connection portion 24. In the embodiment, the names of the leg portion 22 and the connection portion 24 are given based on a shape formed by each of them when different coil segments are connected to each other and formed substantially into a U-shape, as to be illustrated in FIG. 4. In other words, a portion corresponding to two legs which together form a U-shape is referred to as the leg portion 22, and a portion connecting the two legs is referred to as the connection portion 24.

The coil segment 20 is formed by arranging the connection portion 24 on one end of the stator core 10 in the rotation axial direction and the leg portions 22 on the inner side of the slot 14. The leg portion 22 and the connection portion 24 are formed in linear shapes respectively, and together form a predetermined angle. The connection portion 24 is often slightly bent to correspond to the bending of the stator core 10 in the circumferential direction, but the bending is ignored in FIG. 2. The leg portion 22 and the connection portion 24 are respectively formed to have a width W and a thickness D when viewed in a cross-section perpendicular to the direction of current flow. In other words, the leg portion 22 and the connection portion 24 respectively have a cross-sectional area of W × D. The boundary between the leg portion 22 and the connection portion 24 is formed in a shape having a cross-sectional area that is greater than W × D by making a distance between an inner bending point 23a and an outer bending point 23b greater than W.

FIG. 3 is a perspective view schematically illustrating a shape of another coil segment 30. The coil segment 30 is composed of a leg portion 32 and a connection portion 34. Similar to the coil segment 20, the coil segment 30 has the leg portion 32 and the connection portion 34 formed in linear shapes, respectively, and together forming a predetermined angle. The bending of the connection portion 34 corresponding to the stator core 10 in the circumferential direction is ignored in the same manner as in FIG. 2.

In the coil segment 30, the leg portion 32 is formed to have a width W, a thickness D, and a cross-sectional area of W × D when viewed in a cross-section perpendicular to the direction of current flow. On the other hand, the connection portion 34 is a widened portion that is thicker than the leg portion 32 in the depth direction of the paper sheet, and has the width W, a thickness E (where E > D), and a cross-sectional area of W × E. The boundary between the leg portion 32 and the connection portion 34 is formed to have a cross-sectional area that is at least approximately equal to or greater than W × D.

FIG. 4 is a perspective view illustrating substantially a U-shaped coil segment 40 in which the coil segment 20 illustrated in FIG. 2 is connected to the coil segment 30 illustrated in FIG. 3. The coil segments 20, 30 are connected to each other by, for example, welding a vicinity of a tip of the connection portion 24 and a vicinity of a tip of the connection portion 34. They are connected such that a connection part has a cross-sectional area of at least W × D. Further, when they are connected, a connection angle is set such that the leg portion 22 and the leg portion 32 are approximately parallel to each other, and are smoothly arranged on the inner side of the slot 14.

The coil segment 40 is formed of a conductor and an insulator in which the conductor is insulation-coated. As the conductor, copper is typically used. In addition, as the insulator, an insulating resin, such as enamel, is used. The coil segments 20, 30 can be formed by connecting conductor pieces that are not insulation-coated at all by welding or the like, and insulation-coating the connected conductor that has been formed in the above manner. Alternatively, the coil segments 20, 30 may be formed by preparing in advance the coil segments 20, 30 in which all portions other than the connection parts have been insulation-coated, connecting the connection part by welding or the like, and then insulating the connection part.

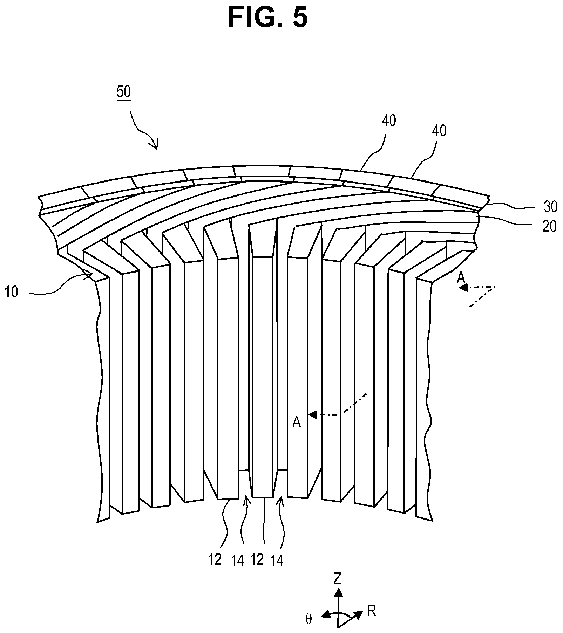

FIG. 5 is a diagram illustrating a stator 50. The stator 50 is formed by arranging the coil segment 40 illustrated in FIG. 4 on the stator core 10 illustrated in FIG. 1. However, FIG. 5 illustrates a state where only one row of the coil segments 40 is arranged in the R-axis direction. In this one row in the R-axis direction, all planned coil segments 40 are arranged in the circumferential direction. As illustrated in FIG. 5, the coil segments 40 adjacent to each other in the circumferential direction are arranged so as to be sufficiently close to each other in the circumferential direction and the rotation axial direction. Since each coil segment 40 is formed in a shape in which it can be arranged in combination with adjacent coil segments 40 in the circumferential direction, the coil density can be increased. Of course, tolerance or slight gaps may be provided between the coil segments 40 in consideration of an assembly processing.

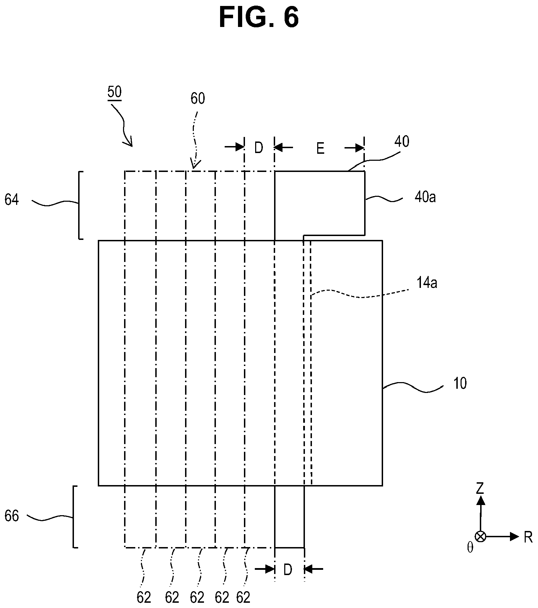

FIG. 6 is a diagram illustrating a surface AA in FIG. 5. In FIG. 6, the remaining five rows of coil segments 62 in the R-axis direction that are not shown in FIG. 5 are represented by dash-dot-dash lines.

As illustrated in FIG. 6, the coil segment 40 in the outermost row in the R-axis direction has a thickness D in the R-axis direction on the inner side of the stator core 10 and at a coil end 66 protruding from a surface of one end of the stator core in the rotation axial direction. However, at a coil end 64 protruding from a surface of the other end of the stator core 10 in the rotation axial direction, the above coil segment 40 has a widened portion 40a extending in the R-axis direction beyond an end 14a in the R-axis direction of the slot 14. This is because the connection portion 34 of the coil segment 30, which is a part of the coil segment 40, has the thickness E, as illustrated in FIG. 3. The thickness E of the widened portion 40a is set such that the coil end 64 does not protrude from the end of the stator core 10 in the R-axis direction.

All of the five rows of coil segments 62 provided on the inner circumferential side in the R-axis direction with respect to the coil segment 40 are set to have the thickness D in the R-axis direction. For this reason, the coils 60 formed of the coil segment 40 and the five rows of coil segments 62 are closely arranged in the R-axis direction as well. Therefore, the coils 60 are formed in a linear shape parallel to the rotation axial direction without any particular unevenness on the inner circumferential side.

Here, an effect of the stator 50 illustrated in FIG. 6 will be examined. First, in the stator 50 in FIG. 6, a case is considered where, instead of the coil segment 40, a coil segment 62 having the thickness D is used in the outermost row in the R-axis direction as well. In this case, a cross-sectional area becomes W × D at all positions in the coil 60. In general, electrical resistance is proportional to a length of a conductive wire and inversely proportional to a cross-sectional area of the conductive wire. For this reason, in order to reduce electrical resistance, it is conceivable to increase the cross-sectional area of the conductive wire. However, as can be seen in FIG. 5, the density of the coil 60 is already sufficiently high, especially at the coil end 64, and assembling for further increasing the density is difficult. Accordingly, although it is conceivable to increase a height of the coil end 64 (a length in the rotation axial direction), it would cause an increase in a size of the stator 50.

Conversely, in the stator 50 illustrated in FIG. 6, the coil segment 40 on the outermost circumferential side in the R-axis direction is set to have a cross-sectional area, which is widened toward the outer circumferential side, of W × E at the coil end 64. For this reason, it is possible to reduce electrical resistance of the coil 60 and improve electrical efficiency. Moreover, since a width of the stator core 10 in the R-axis direction is unchanged while the height of the coil end 64 is unchanged, it is possible to prevent the size of the stator 50 from being increased.

In the above description, as illustrated in FIG. 5, the coil segments 40 having the same shape are uniformly arranged in the entire circumferential direction. However, in an actual stator 50, the coil segment 40 needs to be arranged so as to form a magnetic pole by supplied alternating current power (for example, three-phase alternating current power). For this reason, usually, various types of coil segments having different lengths of connection portions are arranged. In addition, positions of two legs arranged in the respective slots 14 in the R-axis direction (when counting the rows from the inner circumferential side or the outer circumferential side, which row the legs are positioned in) may be different from each other. Therefore, in reality, at a coil end, by reducing the coil density in the same row to be lower than the density illustrated in FIG. 5, space for arranging the coil segments over a plurality of rows is secured. However, those skilled in the art will be able to easily understand and implement the technical idea of the present embodiment.

Further, in the above description, at the coil end 66, it is assumed that vicinities of tips of leg portions of the coil segments 40, 62 are appropriately bent in the circumferential direction, processed into the shape of the connection portion, and then connected to other coil segments. However, it is also possible to adopt a mode in which the leg portions of the coil segments 40, 62 are not formed too long and the shapes are not deformed. In this case, at the coil end 66, it is conceivable to connect the above coil segments to other coil segments having connection portions. Alternatively, it is also conceivable to manufacture coil segments in which connection portions similar to those on the coil end 64 side are provided in advance on the coil end 66 side. Such a coil segment can be easily formed by using press processing or the like, as to be described below.

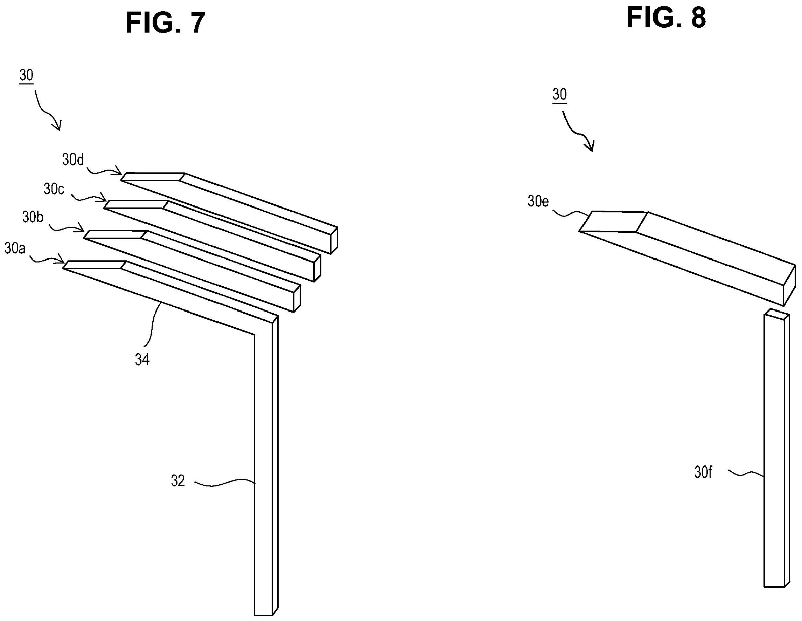

Subsequently, a method of manufacturing the coil segment 30 that composes the coil segment 40 will be described with reference to FIGS. 7 and 8.

FIG. 7 is an exploded view of the coil segment 30 illustrated in FIG. 3. In the example illustrated in FIG. 7, the coil segment 30 is formed by connecting four conductor pieces 30a, 30b, 30c, 30d having a thickness D by welding or the like. (In the example of FIG. 7, it is assumed that E = 4 × D.) The conductor piece 30a includes the leg portion 32 and the connection portion 34. Further, the conductor pieces 30b, 30c, 30d are all formed in the shape of only the connection portion 34. The conductor pieces 30a, 30b, 30c, 30d are formed by press processing in which a copper plate having the thickness D is punched with a die. Alternatively, from a viewpoint of reducing the number of press processes, a copper plate having a thickness of 3 × D may be punched to form a conductor piece having the thickness of 3 × D, and the conductor piece may be connected to the conductor piece 30a. Press processing is suitable for mass production, and enables the coil segment 30 to be manufactured swiftly and inexpensively.

FIG. 8 is an exploded view based on another method of manufacturing the coil segment 30 illustrated in FIG. 3. In the example illustrated in FIG. 8, the coil segment 30 is formed by connecting, by welding or the like, a conductor piece 30e forming a connection portion and a conductor piece 30f forming a leg portion. Similar to the example in FIG. 7, the conductor piece 30f of the above pieces can be formed by press processing in which a copper plate having a thickness D is punched. Further, the conductor piece 30e can be formed by press processing in which a copper plate having a thickness E is punched. However, in press processing, the processing accuracy is decreased as the thickness of the copper plate is increased. Therefore, depending on the thickness E, the conductor piece 30e may be manufactured by another processing method, such as forging or casting. In a processing method capable of forming a product having partially different thicknesses, such as forging or casting, it is conceivable to integrally manufacture the coil segment 30 or the coil segment 40.

The coil segment 20 can be easily manufactured by pressing a copper plate having the thickness D. In the manufacturing method illustrated in FIGS. 7 and 8, a conductor piece corresponding to the coil segment 30 is welded to a conductor piece corresponding to the coil segment 20 to form a connected conductor corresponding to the coil segment 40 illustrated in FIG. 4. By insulating the connected conductor using electro-deposition coating or the like, the coil segment 40 can be manufactured. The insulation is executed such that the coil segment 40 or the coil segment 62 can be immediately welded without insulation-coating the vicinity of the tip of the leg portion of the coil segment 40. After the welding, for example, when the connection part is immersed in a thermosetting resin, it is possible to insulate the portions including the connection part.

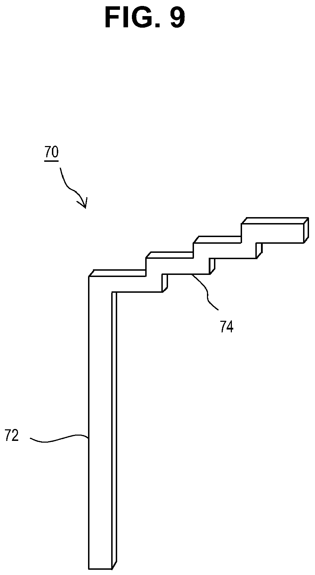

Subsequently, various embodiments will be described with reference to FIGS. 9 to 12.

FIG. 9 is a diagram illustrating a modified example of a shape of a coil segment. A coil segment 70 illustrated in FIG. 9 corresponds to the coil segment 20 illustrated in FIG. 2. The coil segment 70 is the same as the coil segment 20 in that the former is formed of a leg portion 72 and a connection portion 74. However, the coil segment 70 is different from the coil segment 20 in that, in the former, the connection portion 74 is formed into a stepped structure having a stepped shape.

The coil segment 70 can be used in combination with a coil segment having a shape which is the same as or different from itself. For example, in the coil segment 40 illustrated in FIG. 4, the coil segment 70 can be used instead of the coil segment 20. As illustrated in FIG. 5, the coil segment 40 is formed on the assumption that it is closely combined with adjacent coil segments 40. Since the coil segment 70 can be closely combined with adjacent coil segments 70 having the same shape in the circumferential direction, a dense coil end is formed even when the coil segment 70 is used instead of the coil segment 20.

Although a drawing is omitted, in the same manner as the above, it is also possible to use a coil segment in which the connection portion 34 of the coil segment 30 illustrated in FIG. 3 is formed to have a stepped shape. In other words, in the coil segment 40 illustrated in FIG. 4, it is possible to form one or both of the connection portion 24 of the coil segment 20 and the connection portion 34 of the coil segment 30 into a stepped shape. When all or most of the coil segments have a stepped structure at the coil end, by slightly shifting positions of the steps of the coil segments adjacent to each other in the stepped structure in the rotation axial direction, the circumferential direction, or the R-axis direction, it is possible to easily form space for a passage of another coil segment or space for refrigerant flow paths to be described below.

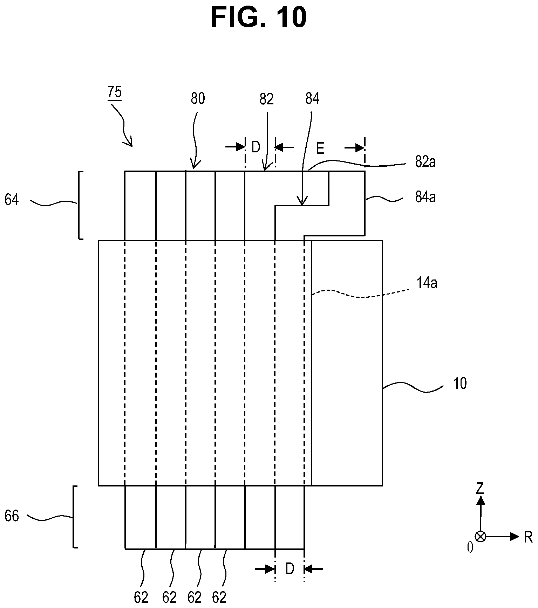

FIG. 10 is a diagram illustrating a modified example of thicknesses of coil segments. FIG. 10 corresponds to FIG. 6, and a like sign denotes a like configuration.

In a stator 75 illustrated in FIG. 10, coil segments in four rows on the inner side of a coil 80 in the R-axis direction are the same as the coil segments 62 illustrated in FIG. 6. Each coil segment 62 has a thickness D in the R-axis direction in the entire rotation axial direction.

A coil segment 82 provided in the fifth row from the inner side of the coil 80 in the R-axis direction and a coil segment 84 provided in the sixth row (the outermost row) from the inner side also have the thickness D in the R-axis direction on the inner side of the stator core 10 and at the coil end 66. However, at the coil end 64, the coil segment 82 has a widened portion 82a having a thickness thicker than the thickness D in the R-axis direction. Further, the coil segment 84 has a widened portion 84a having a thickness E that is even wider than the thickness D in the R-axis direction. When combined together, the widened portion 82a and the widened portion 84a are designed to have a thickness of D + E, as a whole.

As a whole, a shape of the coil 80 at the coil end 64 is not changed from that of the coil 60 illustrated in FIG. 6. However, the coil 80 illustrated in FIG. 10 is different from the coil 60 in that two cross-sectional areas of the coil segments 82, 84 are increased. Which electrical resistance of the coil 60 and the coil 80 can be reduced cannot be simply stated since it depends on the length of a circuit at the coil end 64, and it is necessary to examine an actual configuration of the circuit in detail.

In the example illustrated in FIG. 10, the coil segment 82 is formed so as to shift a thick portion in the outer direction of the R-axis to a small extent, and the coil segment 84 is formed so as to shift a thick portion to a large extent. It is assumed that the coil segment 82 and the coil segment 84 are provided with a stepped structure therebetween and each of them has one step, such that they are closely arranged by combining their steps. However, the boundary between the coil segment 82 and the coil segment 84 may also be formed in, for example, a multi-stepped structure or an inclined surface structure.

In the example illustrated in FIG. 10, thicknesses of the coil segments 82, 84 in the R-axis direction in only the two outer rows in the R-axis direction are greater than the thickness D. However, the thicknesses in the R-axis direction in the three or more outer rows in the R-axis direction may also be greater than the thickness D.

In another embodiment, it is conceivable to set the thickness of the coil segment in the R-axis direction in one row or two or more rows when counting the rows from the innermost side in the R-axis direction to be greater than the thickness D, and shift the thick portion to the inner side in the R-axis direction to arrange it there. This can be realized if it is possible to prevent physical interference or electromagnetic interference with a rotor or the like existing on the inner side in the R-axis direction.

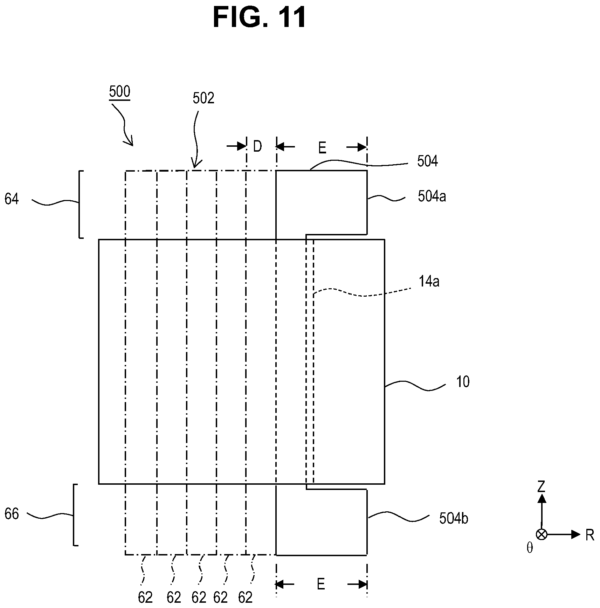

Here, yet another embodiment will be described with reference to FIG. 11. FIG. 11 corresponds to FIG. 6, and a like sign denotes a like configuration. Coil segments the same as the coil segments 62 illustrated in FIG. 6 are used in the five rows on the inner side in the R-axis direction in a coil 502 of a stator 500 illustrated in FIG. 11. Each coil segment 62 has a thickness D in the R-axis direction in the entire rotation axial direction.

In the coil 502, a shape of a coil segment 504 provided in the sixth row from the inner side in the R-axis direction (the outermost row) is different from that of the coil segment 40 illustrated in FIG. 6. The coil segment 504 has the thickness D in the R-axis direction on the inner side of the stator core 10. However, the coil segment 504 has widened portions 504a, 504b which are respectively widened to have a thickness E in the R-axis direction at both coil ends 64, 66. For this reason, in the coil segment 504, it is possible to reduce electrical resistance at both coil ends 64, 66 and further improve electrical efficiency.

The coil segment 504 can be formed by, for example, providing the conductor pieces 30e at both ends of the conductor piece 30f of the coil segment 30 illustrated in FIG. 8. Of course, the coil segment 504 can also be manufactured in the mode illustrated in FIG. 7. Alternatively, the coil segment 504 can also be formed by providing a portion of the coil end 66 having the thickness E in the linear leg portion, and appropriately executing bending deformation on the portion. Moreover, as illustrated in FIG. 10, also at the coil end 66, a widened portion corresponding to the widened portion 504b may be formed by providing and combining widened portions in a plurality of rows in the R-axis direction. In such cases, the widened portion 504a and the widened portion 504b at the coil ends 64, 66 may have different widths.

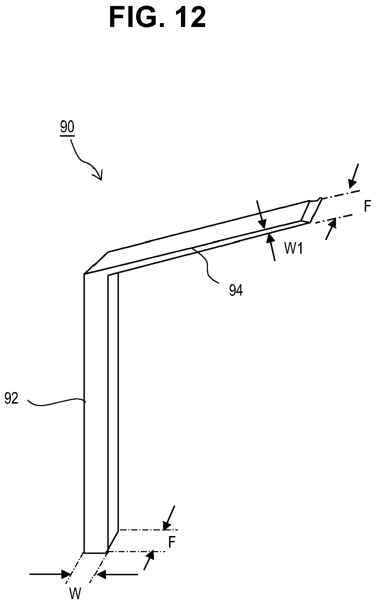

Next, a coil segment 90 of still another embodiment will be described with reference to FIG. 12. The coil segment 90 illustrated in FIG. 12 has a linear leg portion 92 and a connection portion 94 extending linearly from the leg portion 92. A cross-section of the leg portion 92 in the direction of current flow is set to have a width W in the parallel direction of the paper sheet, a thickness F in the depth direction of the paper sheet, and a cross-sectional area of W × F. On the other hand, a cross-section of the connection portion 94 in the direction of current flow is set to have a width W₁ (where, W₁ < W) in the parallel direction of the paper sheet, the thickness F in the depth direction of the paper sheet, and a cross-sectional area of W₁ × F. Further, an angle formed by the connection portion 94 and the leg portion 92 is steeper than that of the coil segment 20 illustrated in FIG. 2 (close to the right angle).

When the coil segment 90 is installed in the stator core 10, a size of the coil end can be reduced. Since the cross-sectional area of the connection portion 94 of the coil segment 90 is small, it is possible to reduce a volume of the coil end. In FIG. 12, in particular, a thickness of the coil segment 90 in the longitudinal direction of the paper sheet is set to be thinner than, for example, that of the coil segment 20 illustrated in FIG. 2 so as to reduce a height of the coil end in the rotation axial direction. Due to the thinness, it is possible to form the connection portion 94 into a shape close to the end surface of the stator core 10 in the rotation axial direction.

However, in the coil segment 90, electrical resistance of the connection portion 94 is higher than that of the leg portion 92. It can be said that the coil segment 90 is in a mode in which reduction of a size of a device is prioritized over improvement in electrical efficiency.

In the coil segment 90, in order to make the cross-sectional area of the connection portion 94 smaller than that of the leg portion 92, a thickness of the connection portion 94 in the longitudinal direction of the paper sheet is made smaller. Instead of this, it is possible to reduce the volume of the entire coil end by, for example, reducing a thickness of the connection portion 94 in the depth direction of the paper sheet. When the thickness in the depth direction of the paper sheet is reduced, it is possible to reduce the size of the coil end in the R-axis direction, contrary to what has been described with reference to FIG. 6 or 10.

### (2) Embodiments of Refrigerant Flow Path

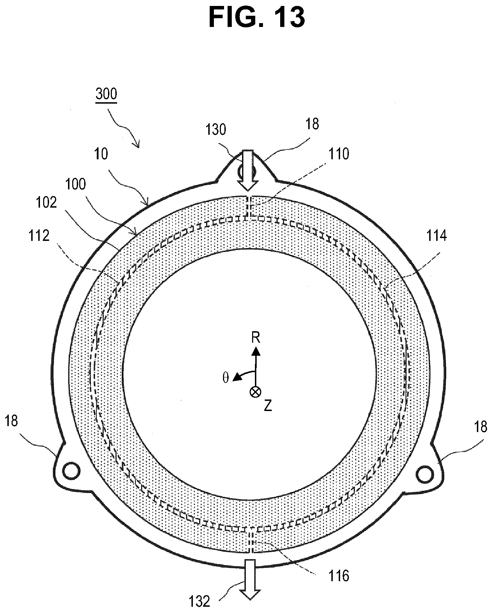

The refrigerant flow paths provided at coil ends will be described with reference to FIGS. 13 to 18.

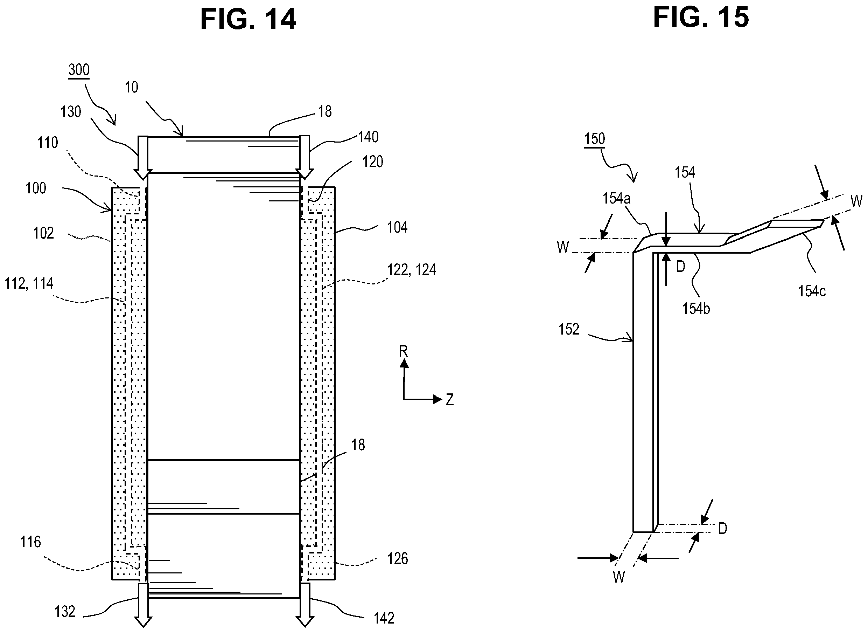

FIG. 13 is a diagram illustrating a stator 300 when viewed from the rotation axial direction (the Z-axis direction). Moreover, FIG. 14 is a side view of the stator 300. The rotation axis of the stator 300 is arranged horizontally. In FIG. 14, the direction from the top to the bottom of the paper sheet is vertically downward (the direction in which gravity acts).

The stator 300 includes the stator core 10 and a coil 100. The stator core 10 is assumed to be the same as that illustrated in FIG. 1. The stator core 10 is basically formed in a cylindrical shape and further includes protrusions 18 provided with fixing holes at three locations on the outer surface thereof.

The coil 100 is formed in the same manner as the coil 60 illustrated in FIG. 6 or the coil 80 illustrated in FIG. 10. However, the coil 100 illustrated in FIG. 13 is provided with a refrigerant flow path used for allowing a liquid refrigerant to flow. As the liquid refrigerant, for example, oil and water can be used. In the present embodiment, it is assumed that the stator 300 is mounted on a vehicle and an oil referred to as an automatic transmission fluid (ATF) is used as a liquid refrigerant.

The refrigerant flow paths are provided at coil ends 102, 104 on both sides of the stator core 10, not on the inside of the stator core 10, in the rotation axial direction, respectively. At the coil end 102, the refrigerant flow path is composed of an introduction path 110, two circumferential paths 112, 114, and a lead-out path 116. The introduction path 110 is a refrigerant flow path through which the liquid refrigerant supplied from the above coil end 102 is introduced into the inside of the coil end 102. In the example in FIG. 13, the introduction path 110 is provided in a vicinity of the highest portion of the coil end 102 in the vertical direction, extends perpendicularly downward at the boundary with the stator core 10, and then extends horizontally toward the direction that is away from the stator core 10.

The circumferential paths 112, 114 are refrigerant flow paths used for allowing the refrigerant flow path to flow into the inside of the coil end 102. Each of the circumferential paths 112, 114 is formed to make a half circuit in the circumferential direction inside the coil end 102, and thus they form a refrigerant flow path that makes a full circuit in the circumferential direction, as a whole. The circumferential paths 112, 114 communicate with the introduction path 110 in the upper part in the perpendicular direction. Further, the circumferential paths 112, 114 communicate with the lead-out path 116 in the lower part in the perpendicular direction.

The lead-out path 116 is a refrigerant flow path through which the liquid refrigerant is led from the inside of the coil end 102 to the outside. The lead-out path 116 is provided in a vicinity of the lowest portion of the coil end 102 in the perpendicular direction so as to communicate with the circumferential paths 112, 114. The lead-out path 116 extends horizontally to the stator core 10 side and then extends perpendicularly downward at the boundary with the stator core 10 to reach the outer surface of the coil end 102.

The stator 300 is installed inside a case (not shown), and a liquid refrigerant is injected into the case. The liquid refrigerant collected near the bottom of the case is pumped up and overlaid over the stator 300 from above the stator 300. A part of the liquid refrigerant flows downward along a side surface of the stator core 10 of the stator 300. Further, a part of the liquid refrigerant flows downward along the outer surfaces of the coil ends 102, 104. In this process, the liquid refrigerant can take away the heat generated in the coil 100 or the stator core 10, and maintain the coil 100 and the stator core 10 at a low temperature to some extent. However, by only cooling from the outer surface of the coil 100, there is a limit to improving the cooling efficiency.

Therefore, in the stator 300, a part of a liquid refrigerant 130 is injected into the introduction path 110. The liquid refrigerant injected into the introduction path 110 flows through the circumferential paths 112, 114 and then reaches the lead-out path 116. Then, a liquid refrigerant 132 flows out from the lead-out path 116 to the outside of the coil end 102. Consequently, the liquid refrigerant can take away heat even from the inside of the coil end 102 and lower the temperature in a vicinity of the coil end 102.

Similarly, the coil end 104 is also provided with a communicating refrigerant flow path composed of an introduction path 120, circumferential paths 122, 124, and a lead-out path 126. Then, a liquid refrigerant 140 flows in from the introduction path 120, and a liquid refrigerant 142 flows out from the lead-out path 126. In this process, the inside of the coil end 104 is cooled.

In addition, it should be noted that the refrigerant flow paths illustrated in FIGS. 13 and 14 are merely examples. For example, the circumferential paths 112, 114 do not have to communicate with each other and can be independently formed. In this case, the introduction path 110 and the lead-out path 116 are provided in each of the circumferential paths 112, 114. Further, for example, it is conceivable to provide the circumferential paths 112, 114 at the boundary with the stator core 10. In addition, a plurality of circumferential paths 112, 114 may be provided.

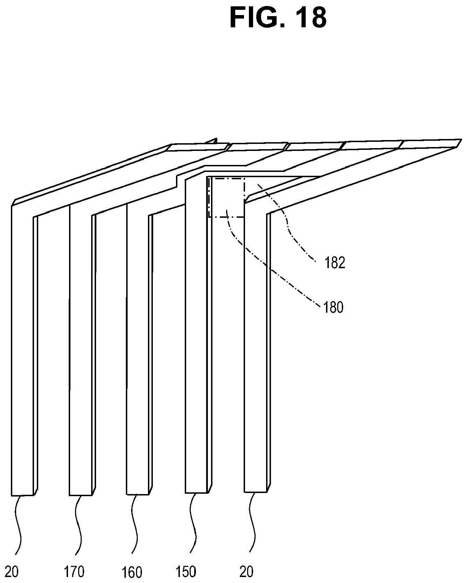

FIGS. 15 to 18 are diagrams illustrating examples of forming a refrigerant flow path at a coil end in which adjacent coil segments are closely arranged in the circumferential direction. FIGS. 15 to 17 are perspective views respectively illustrating three coil segments 150, 160, 170 used for forming the refrigerant flow path. FIG. 18 is a diagram illustrating a state in which the coil segments 150, 160, 170 are used in combination with the coil segment 20 illustrated in FIG. 2.

The coil segment 150 illustrated in FIG.15 is composed of a leg portion 152 and a connection portion 154. The leg portion 152 is formed in a linear shape, and is formed to have a width W and a thickness D. The connection portion 154 is composed of portions 154a, 154b, 154c in order from the leg portion 152 side. The portion 154a is formed at an oblique angle with respect to the leg portion 152. The portion 154b is formed at an angle orthogonal to the leg portion 152. In addition, the portion 154c is formed at an oblique angle with respect to the leg portion 152, and is set parallel to the portion 154a. Unlike the leg portion 152, thicknesses of the portions 154a, 154b in the depth direction of the paper sheet are set to W. Further, a height of the portion 154b in the longitudinal direction of the paper sheet is set to D.

On the other hand, the portion 154c is set in the same manner as the connection portion 24 of the coil segment 20 illustrated in FIG. 2. In other words, a thickness in the depth direction of the paper sheet is D, which is the same as that of the leg portion 152, and a width when viewed in the direction of current flow is W.

In the coil segment 150, as a whole, a cross-sectional area when viewed in the direction of current flow is set to be approximately equal to or slightly greater than W × D. Therefore, as a whole, electrical resistance of the coil segment 150 is substantially uniform.

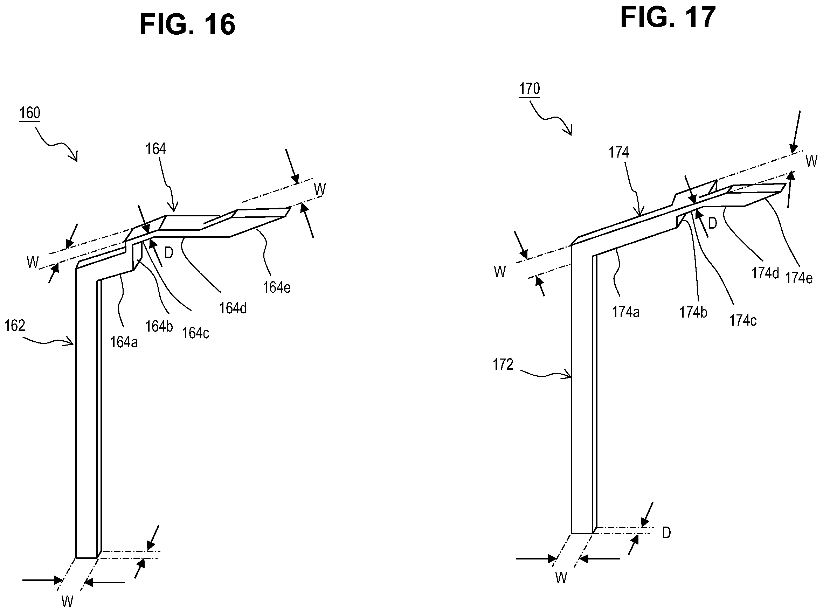

The coil segment 160 illustrated in FIG. 16 is composed of a leg portion 162 and a connection portion 164. The leg portion 162 is set to have a width W and a thickness D. The connection portion 164 is composed of portions 164a, 164b, 164c, 164d, 164e in order from the leg portion 162 side. Of these, the portions 164a, 164e are formed in the same shape as the connection portion 24 of the coil segment 20 illustrated in FIG. 2 and have the width W and the thickness D in the direction of current flow. The portion 164b extends in the same direction as the leg portion 162, the portion 164c extends in a direction parallel to the portions 164a, 164e, and the portion 164d extends in a direction orthogonal to the leg portion 162. A cross-section of the portions 164b, 164c, 164d in the direction of current flow has the width W in the depth direction of the paper sheet and the thickness D in the parallel direction of the paper sheet. Therefore, as a whole, even electrical resistance of the coil segment 160 is almost uniform.

The coil segment 170 illustrated in FIG. 17 is composed of a leg portion 172 and a connection portion 174. The leg portion 172 is set to have a width W and a thickness D. The connection portion 174 is composed of portions 174a, 174b, 174c, 174d, 174e in order from the leg portion 172 side. The portions 174a, 174e are formed in the same shape as the connection portion 24 of the coil segment 20 illustrated in FIG. 2 and have the width W and the thickness D in the direction of current flow. On the other hand, a cross-section of the portions 174b, 174c, 174d in the direction of current flow has the width W in the depth direction of the paper sheet and the thickness D in the parallel direction of the paper sheet. Of these, the portion 174c is set in parallel with the portions 174a, 174e. Further, the portion 174b is provided such that a cross-sectional area is approximately W × D between the portion 174a and the portion 174c. Similarly, the portion 174d is provided such that a cross-sectional area is approximately W × D between the portion 174c and the portion 174e. Therefore, as a whole, even electrical resistance of the coil segment 170 is almost uniform.

FIG. 18 is a diagram illustrating a state where the coil segments 20, 150, 160, 170, 20 are combined in this order to form refrigerant flow paths 180, 182. FIG. 18 corresponds to the combination of coil segments 20 illustrated in FIG. 5. Then, the refrigerant flow paths 180, 182 correspond to a part of the introduction path 110 or the lead-out path 116 illustrated in FIG. 13. In FIG. 5, the coil segments 20 are combined so as to be in close contact with each other. On the other hand, in the example of FIG. 18, as a result of deforming the coil segment 150 adjacent to the coil segment 20, the refrigerant flow path 180, which is space having a substantially rectangular cross-section, is formed. Moreover, with respect to the coil segment 20, the refrigerant flow path 182 having a substantially triangular cross-section and communicating with the refrigerant flow path 180 is also formed. When the coil segment 150 is deformed, in order to prevent electrical resistance from being increased due to a reduction in the cross-sectional area, a width in the depth direction of the paper sheet is widened, as illustrated in FIG. 15.

The refrigerant flow path 180 is set to such a size in which the liquid refrigerant flows smoothly even when the refrigerant flow path 182 does not exist. In addition, wall surfaces of the refrigerant flow paths 180, 182 are formed of the coil segments 150, 20 and the teeth 12 of the stator core 10 (not shown). Gaps between the coil segments 150 and 20, between the coil segments 150 and the teeth 12, and between the coil segments 20 and the teeth 12 are set to be smaller than a size of a limit at which a large amount of liquid refrigerant leaks out to some extent. A size of a limit of the gaps is typically determined by the liquid refrigerant, and surface tension of the coil segments 20, 150 and the teeth 12.

By changing a shape of the coil segment 150, shapes of the adjacent coil segments 160, 170 are also changed. The coil segment 160 is formed so as to receive the deformed shape of the coil segment 150 and approach the coil segment 20. Similarly, the coil segment 170 is formed so as to absorb the deformed shape of the coil segment 160 and approach the coil segment 20. Consequently, the coil segment 20 can be provided again next to the coil segment 160. Moreover, also in the coil segments 160, 170, in order to prevent electrical resistance from being increased due to a reduction in the cross-sectional area, widths in the depth direction of the paper sheet are widened, as illustrated in FIGS. 16 and 17.

The widening in the depth direction of the paper sheet in the coil segments 150, 160, 170 can be absorbed by deforming the coil segment 30 as illustrated in FIG. 3. Since the cross-sectional area of the coil segment 30 is greater than that of the coil segment 20, even when it is deformed, it is possible to secure a cross-sectional area equal to or greater than that of the coil segment 20.

In addition, on the depth side of the paper sheet of the refrigerant flow path 180 illustrated in FIG. 18, the coil segment 30 is deformed to form a refrigerant flow path having an area equal to or greater than that of the refrigerant flow path 180. Since the coil segment 30 originally has a great cross-sectional area, it is possible to secure a cross-sectional area equal to or greater than that of the coil segment 20 even when it is deformed so as to secure the refrigerant flow path.

Similarly, by providing space on the inside of the coil end 102, it is also possible to form the circumferential paths 112, 114 illustrated in FIG. 13. The coil segments forming wall surfaces of the circumferential paths 112, 114 are sequentially replaced along the circumferential direction. In this case, by arranging them sufficiently close to each other, it is possible to prevent leakage of the liquid refrigerant.

In the above description, in order to provide the refrigerant flow paths 180, 182, the coil segments 150, 160, 170 have a special thickness in the R-axis direction to prevent the cross-sectional area from being reduced. However, this complicates the shapes of the coil segments 150, 160, 170. Therefore, the coil segments 150, 160, 170 do not have to have a special thickness in the R-axis direction. In this case, the cross-sectional areas of the coil segments 150, 160, 170 are partially reduced and electrical resistance thereof is increased. However, if the increase in electrical resistance is within a permissible range, it is possible to choose to simplify the shapes of the coil segments 150, 160, 170. The same can be applied to a case where the circumferential paths 112, 114 are formed.

The introduction paths 110, 120 and the lead-out paths 116, 126 are formed so as to extend in the R-axis direction by utilizing the teeth 12 of the stator core 10. As illustrated in FIG. 1, typically, the width of the teeth 12 in the circumferential direction is wider toward the outside and narrower toward the inside in the R-axis direction. Further, when the width of each coil segment is formed to be constant in the circumferential direction regardless of the arrangement location in the R-axis direction, it is possible to secure a wider space between the coil segments on the outer side of the inner side and the outer side in the R-axis direction. Therefore, it is easier to secure space from the outside in the R-axis direction toward the inside of the coil than space for the refrigerant flow path from the inside in the R-axis direction toward the inside of the coil.

The refrigerant flow paths can be formed at both coil ends. As described above, since the coil segment can be easily formed into a desired shape by press processing or the like, it is possible to form the shape of the refrigerant flow path at both coil ends.

## Claims

1. A stator (50; 75; 500) of a rotating electric machine, the stator (50; 75; 500) comprising:
a stator core (10) including a plurality of teeth (12) arranged around a rotation axis of the rotating electric machine and slots (14) respectively defined between the teeth (12); and
a coil (60; 80; 502) winding the teeth (12), wherein the coil (60; 80; 502) includes a plurality of coil segments (40, 62; 62, 82, 84; 62, 504) connected to each other, and a cross-sectional area of at least a part of a coil segment (40; 82, 84; 504) of the plurality of coil segments (40, 62; 62, 82, 84; 62, 504) at a coil end part (64) of the coil (60; 80; 502) protruding from an end surface of the stator core (10) in a direction of the rotation axis is different from a cross-sectional area of the coil segment (40; 82, 84; 504) on an inner side of a slot (14) of the slots (14).

2. The stator (50; 75; 500) according to claim 1, wherein the cross-sectional area of at least the part of the coil segment (40; 82, 84; 504) at the coil end part (64) is greater than the cross-sectional area of the coil segment (40; 82, 84; 504) on the inner side of the slot (14).

3. The stator (50; 75; 500) according to claim 1, wherein the cross-sectional area of at least the part of the coil segment (90) at the coil end part (64) is smaller than the cross-sectional area of the coil segment (90) on the inner side of the slot (14).

4. The stator (50; 75; 500) according to claim 2, wherein at least the part of the coil segment (40; 82, 84; 504) at the coil end part (64) is widened toward an outer circumferential side of the stator core (10), as compared with the coil segment (40; 82, 84; 504) on the inner side of the slot (14).

5. The stator (50; 75; 500) according to claim 4, wherein:
a first coil segment (20) including a first connection portion (24) is connected to a second coil segment (30) including a second connection portion (34) at the coil end part (64);
at least one of the first connection portion (24) and the second connection portion (34) is widened toward the outer circumferential side of the stator core (10), as compared with the coil segment (30) on the inner side of the slot (14).

6. A method of manufacturing a coil segment, the method comprising:
connecting two or more pressed conductor pieces (30a to 30f) to each other to form a connected conductor that includes a leg portion (32) arranged in a stator core (10) and a connection portion (34) arranged at a coil end part (64); and
executing an insulating process on the connected conductor to form a coil segment (30), wherein a cross-sectional area of at least a part of the connection portion (34) is formed to be different from a cross-sectional area of the leg portion (32).
